# EUROPEAN PATENT APPLICATION

(11) **EP 1 612 561 A1**
(43) Date of publication of application: **04.01.2006**
(21) Application number: 04015574.9
(22) Date of filing: 02.07.2004
(51) Int. Cl.: G01N 35/00, C12Q 1/68

(54) **Instrument for efficient treatment of analytical devices**

(71) Applicant: Roche Diagnostics GmbH, 68305 Mannheim (DE); F. HOFFMANN-LA ROCHE AG, 4070 Basel (CH)
(72) Inventor: Haack, Carsten, 6330 Cham (CH); Stettler, Ueli, 6330 Cham (CH)

(57) **Abstract**

Subject of the invention is an instrument for automatically processing analytical devices wherein efficient washing and hybridization is effected by moving the disposable in continuous rotational way in heatable, open carrier manifolds.

## Description

Subject of the present invention is an instrument for processing one or more analytical devices containing immobilized binding reagents, a system comprising such instrument, a method for processing the analytical device and a method for the determination of an analyte in said device.

### Background of the invention

The invention is useful in the field of analytics, wherever a device containing immobilized reagents bound to an inner surface of said device are to be contacted with a sample to bind a component of said sample to said device. Particularly, the invention is useful in the field of molecular diagnostics, i.e. the analysis of nucleic acid components in samples such as human body fluids or in environmental samples.

Due to the progress achieved in increasing the sensitivity of assays by amplifying nucleic acid sequences, for instance by the Polymerase Chain Reaction (PCR), as disclosed in EP 0 201 184 and subsequent detection as disclosed in EP 0 200 362 molecular diagnostics has been established as a tool to determine nucleic acid containing parameters, like viruses and bacteria, for instance Hepatitis B virus and HIV. PCR based assays were developed using the so called heterogenous format as disclosed in EP 0 420 260. In those assays, exemplified in Roche's AMPLICOR assays, nucleic acid sequences of a nucleic acid of a defined analyte, like Hepatitis B virus, are amplified and immobilized on so called capture probes contained in a tube. Due to the slow diffusion of nucleic acids to the capture probes, the immobilization required some time to come to completion. This disadvantage was avoided by the so called homogenous assays that did not need immobilized probes for the detection. An exemplary method is disclosed in EP 0 543 942.

Instruments for performing PCR were developed to conveniently perform the required thermal cycles needed to anneal the primers to the target nucleic acid, extend the primers using the target nucleic acid as a template, and separate the nucleic acid strands to provide single strands that can again bind the primers. A thermocycler useful to conduct thermocycles is disclosed in EP 0 236 069.

Due to the capacity of PCR to amplify nucleic acid sequences which are present in samples in only minute amounts and to amplify different sequences in one sample, assays were developed to amplify and detect several analytes or parameters independently in parallel. Particularly, if more then ten analytes are suspected to be contained and detected in one sample, those assays require the use of a corresponding number of probes, preferably immobilized to separate sites of a solid surface. The manufacture of chips containing a large number of different binding agents is disclosed in EP 0 476 014.

A device for holding chips and conducting analytical reactions in said device were proposed in EP 1 161 989. A first method for processing liquids in said device is disclosed in EP 1 226 863. In this method, a cartridge containing a chip is moved back and forth to mix the liquid contained in said cartridge. In EP 1 224 976 there is described a method for mixing a cartridge wherein the cartridge is swung back and forth to force the liquid to pass the surface of the chip. Those devices have very thin cavities in order to avoid transport of liquid from large distances to the surface of the chip. Thin cavities have the disadvantage that filling with liquid requires relatively complicated inlet and outlet channels and adapters to connect the inlet and outlet channel to a fluid system.

In EP 0 695 941 there is disclosed a flat device containing a chip having a flat cavity, inlet and outlet channels being arranged on the flat surface of the device. Again, the device is difficult to fill because the inlet and outlet channels need to be connected tightly to the instrument. US 6,043,080 describes a flat device containing a chip. This device again suffers from the same disadvantages.

Another device for holding chips is disclosed in EP 1 419 821. Because this device has a thicker cavity, diffusion of components of the liquid sample contained therein to the active surface takes too long for routine diagnostics. The reference describes the use of vortexing the liquid sample for mixing.

The instruments presently known have the disadvantage that they do not allow convenient and rapid processing of chip containing devices.

### Brief description of the drawings:

In FIG 1 there is shown a device containing a chip having immobilized reagents on its surface.
- FIG 2: shows the treatment station according to the invention.
- FIG 3: shows the washing station for stationary wash dilution of the device.
- FIG 4: shows an instrument according to the invention from top view.
- FIG 5: shows different front and side views of a possible instrument set up.

### Summary of the invention

In a first embodiment, the invention is directed to an instrument for processing one or more analytical devices containing immobilized binding reagents comprising a sample input station, one or more treatment stations, a detection station, and a transfer module wherein at least one of said treatment stations comprises a shaker unit.

In another embodiment, the invention is directed to a diagnostic system for determining one or more analytes in a sample comprising an instrument comprising a sample input station, a treatment station comprising a shaker unit, a detection station, and a transfer module, and one or more devices containing immobilized binding reagents.

In another embodiment, the invention is directed to a method for determining one or more analytes in a sample using an instrument comprising the steps inserting the sample in a sample input device into an input station on said instrument, inserting one or more devices containing immobilized binding reagents into a disposable input station on said instrument, starting a controlled, automated procedure to transport the sample through a binding station and a detection station, said procedure comprising transferring the sample into said device, transferring reagents into said device, transporting said device into said binding station, keeping said device in said binding station under conditions allowing binding of the analyte to be determined with said binding reagents, transporting said device into said detection station, and detecting a signal based on the binding of said analyte to said binding reagents, and determining the analyte based on said signal.

In another embodiment, the invention is directed to a method for automated processing of one or more analytical devices containing immobilized binding reagents comprising the steps
- providing an instrument comprising one or more treatment stations,
- providing one or more analytical devices containing immobilized binding reagents in a disposable input station on said instrument,
- providing a sample in a sample input station on said instrument,
- starting a controlled, automated procedure to transport the analytical device through said instrument comprising the steps
   - transferring the sample into said device,
   - transferring reagents into said device,
   - transporting said device into said treatment station,
   - maintaining said device in said treatment station under conditions allowing said treatment,

wherein said device is shaken during treatment in said treatment station.

### Detailed description of the invention

Chips for analyzing components of a sample on their surface are well known, for example from EP 0 476 014. They are usually flat plates made form glas or other material inert to the sample and the reagents used to react the sample and its components with. One of their sides is at least partially coated by reagents that are designed to bind the components of the sample to be analysed, if present. The area of said side which is covered by said reagents is from about 4 mm² to about 2 cm². Preferably, the surface covered is flat. The binding reagents are preferably specific for the components to be analysed. In case of antibodies to be determined, the binding reagent may be an antigen which can be bound by the antibody. For the analysis of nucleic acids, the binding reagent may be a nucleic acid comprising a sequence which can hybridize to the nucleic acid to be determined. In case of nucleic acids, the nucleic acids immobilized to the surface are usually oligonucleotides, i.e. chemically synthesized polynucleotides. Methods for their synthesis are disclosed in EP 0 476 014. Depending upon the number of analytes to be determined in the device the corresponding number of different binding reagents are immobilized to the surface. The reagents are conveniently arranged in a geometrically fixed and defined manner. Preferably, ten or more, more preferably between hundred and one million, different binding reagents are immobilized on one chip. Those arrangements are frequently called arrays.

The chip preferably is transparent for radiation used to detect any signal created or bound to the surface of the chip pointing to the interior of the cavity.

The device according to the present invention has a generally tubular body with a bottom wall, side walls and an upper opening which can be closed by a cap or sealing. The body preferably has a cavity with a volume of 10 µl to 800 µl, preferably 20 µl to 200 µl. This cavity is used as a process chamber to treat the sample fluid. Thus, it is designed to at be at least as large as the volume of sample fluid to be transferred into the device for treatment. Preferably, the volume of the chamber is at least 10% larger than the volume of the liquid to be transferred. The cavity further has a form allowing the sample liquid to fully contact the binding reagents on the surface of the chip. The chip is preferably located at one of the side walls of the device, such that the cavity is accessible for a pipetting device for aspirating and dispensing the sample liquid or / and any reagents without the pipetting contacting the surface. The shape of the cavity is such that there is a distance of at least 1.5 mm from the binding reagent bearing surface to the nearest wall of the cavity. Preferably, the cavity has a diameter of at least 3 mm in the region of the chip. The length of said cavity from the bottom to the opening is at least 5 mm.

In a preferred embodiment, the cavity has the shape of a cuboid having side lengths which are equal or of the same order of magnitude. That cuboid has a side length of 3 mm or more.

In a preferred embodiment, the device of the present invention is a device according to EP 1 419 821, which is hereby incorporated by reference to disclose the characteristics and the manufacture of said device.

A sample input station according to the invention is a part of the instrument where samples can be introduced into the instrument. Usually, the sample input station defines the position to receive the containers containing one or more sample vessels. Those positions are defined such that the instrument recognizes each position as to receive a defined sample. This sample preferentially is identified by a label, such as a bar code label that can be read prior to the sample entering the instrument or thereafter or concurrently therewith. This is done by a reader located adjacently to or within the sample input station. In the present invention, the sample receiving station has at least 4 positions to receive sample vessels, preferably at least 8, more preferably between 8 and 96 sample vessels. This way, the instrument is capable of handling a corresponding high number of sample fluids without any need to stop other processes occurring within the instrument.

A sample according to the invention can be any liquid which is intended to be subjected to analysis. Usually samples are fluids taken from the human body, like urine, sputum, blood, liquor or fluids derived therefrom, like serum or plasma. Preferred samples are fluids as above, further pretreated for better analysis. Pretreatment steps may be chosen for the group of isolation of components, removal of components from the sample, concentration, dilution, addition of reagents, amplification of components and lysis of components. Those pretreatment steps may have been done manually, be performed on another instrument, or performed on the same instrument. The sample input station may thus also be the output station of a prior treatment station on the same instrument.

A detection station is a part of the instrument equipped with a unit for detecting a signal received from the sample upon stimulation of the sample. Means for stimulating a sample comprise irradiation by electromagnetic radiation, for instance light appropriate for exciting a component in the device which is a measure of the presence, absence or amount present of the analyte. In a preferred embodiment, the light is used to excite a label attached to a probe. The signal, i.e. the light returning from the device is then correlated with a reference signal received from a sample with known analyte(s). In a more preferred embodiment, the surface of the chip pointing to the inner of the cavity is scanned for a signal and the locations showing a signal and the intensity of the signal received from each location are identified. Those detectors may also include a confocal scanning microscopic device. Suitable scanning detectors are widely known in the art.

A transfer module according to the invention is a part of the instrument intended to transfer a fluid, for instance a sample fluid or a reagent, or / and to transport a device, either empty or containing any fluid, from one location to another location. Thus, preferred transfer modules comprise a liquid handling unit, like a socket for receiving a pipette tip or a syringe, and / or a gripper for interlocking to a device or a part of a device, like a cap. Appropriate transfer modules are well known. A preferred gripper and cap combination is described in EP 0 907 083.

A treatment station is a station designed for treating the device during the analytical process. It includes a position to maintain the device containing the sample at a defined position within the station. Appropriate positioning means are recesses in the station, defining a holder for the device. In a very preferred embodiment, the treatment station comprises a device carrier (12), in the following called dispo carrier which has openings to receive one or more, preferably two or more, most preferably between 4 and 48 single or connected devices. The inner form of the recess preferably mimics the outer form of the device, at least in the part of the device which is intended to be treated in the particular treatment station, such that the device cannot unintendedly escape the treatment station during treatment.

Preferred treatment stations are selected from binding stations, staining stations and washing stations, or any combinations thereof, like a combined binding and staining, a combined staining and washing, a combined binding and washing and a combined binding, staining and washing station. The design of said station is determined by its function. Thus, the functions of the treatment station are selected from the function of binding, staining and washing.

In a first preferred embodiment, the treatment station is a binding station. A binding station preferably provides all conditions needed for efficient binding of components of the sample to one or more of the binding reagents immobilized in the device. Efficient binding preferably is achieved by keeping the sample within the device at a defined temperature. Preferred temperatures for binding nucleic acids to capture probes are between 20 and 95°C, more preferably between 40 and 60 °C. For reaching the intended temperature, the binding station preferably has a heating element, like a resistance heater, a Joule heater or a Peltier element. For maintaining a desired temperature, the station may contain isolation means around the device or/and the heater. Such isolation means may be made from polystyrene or other isolating plastics and may be contained within a cover.

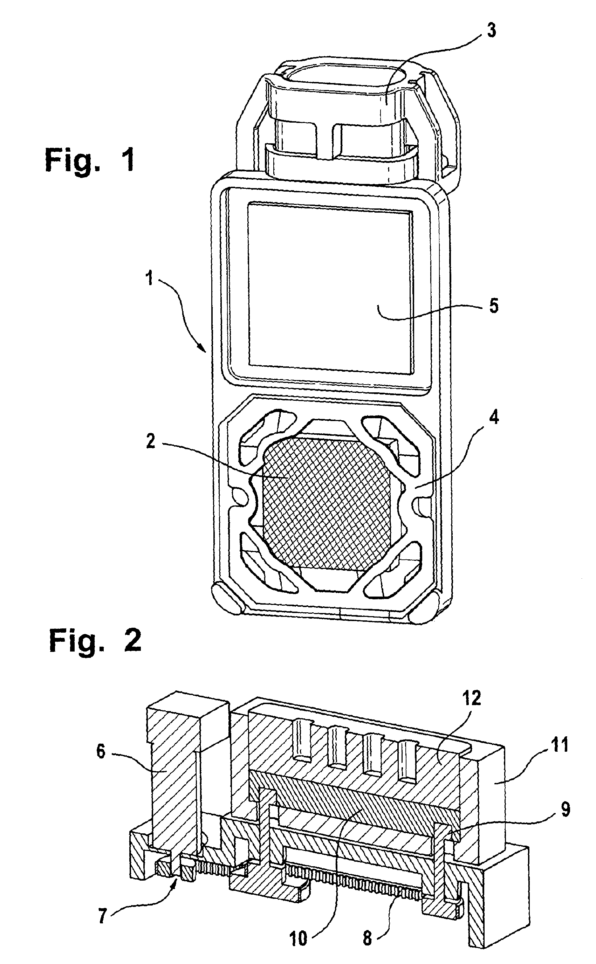

In a preferred embodiment, which is shown on FIG 2, the binding station contains a dispo carrier (12) made from heat conductive material, preferably metal, most preferably aluminium containing the recesses for four devices, an isolation (11) surrounding said dispo carrier, and a heater (10) made from metal or ceramics heating elements.

In a second embodiment, the treatment station is a staining station. Staining is a process to visualize any components bound to the binding reagents immobilized to the device. It is mainly used in case the components are not directly detectable, but need further reagents to develop a signal. Such reagents may be compounds being capable of binding to the components bound to the device. In an exemplary assay, the components of the sample to be analysed are nucleic acids labeled with biotin. In this case, staining can be done by contacting the sample with a conjugate of avidin or streptavidin and a fluorescent label. After completion of the binding reaction of biotin to (strept)avidin the resulting complex will have fluorescent characteristics.

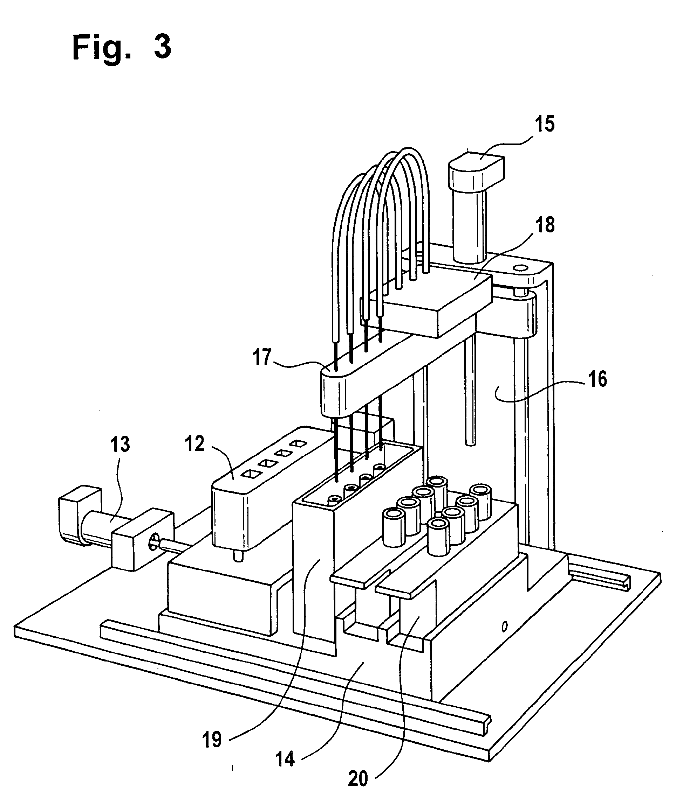

In a third embodiment, the treatment station is a washing station, as depicted in FIG 3. Washing is a process to remove unwanted components of the sample from the bound components. To achieve this, after completion of the binding reaction the liquid is remove from the device, while any components bound by the binding reagents will remain in the device. A washing liquid is added to the device to further dilute any remaining undesired components which may still adhere to the device. The washing liquid is removed from the device together with the undesired components. This process preferably is repeated as often as necessary to remove undesired components to a concentration not interfering with the determination of the intended analyte. The washing liquid has a chemical constitution which does not substantially affect the binding of the analyte to be determined. For efficient automated processing a multiple needle module (17) is mounted to a vertical carriage (16) moved with the drive (15) and the device carrier (12) is mounted to a horizontal carriage (14) moved with the drive (13).

As essential feature of the present invention is that the treatment station comprises a shaker unit. A shaker unit is an equipment which is used to shake the device containing the sample. Shaking is a process of moving the device such that compartments of its content get mixed. So for instance application of ultrasound to the device is not considered shaking, as it does not move the device. Furthermore, vortexing is also not considered shaking, as it does not move the device. Preferably, the shaker is driven by a mechanical drive, for example a motor. The preferred motion comprises at least movement in a plain (X-Y-axes). However, the movement can also have a component in a direction perpendicular thereto (Z-axis). More preferably, the X-Y plain is substantially perpendicular to the earth gravity force.

There are several modes of realizing such shaking. In FIG 2 there is shown an embodiment using an eccentric movement of a dispo carrier containing a number of devices, that uses a simple continuous rotational movement instead of back and forth movements which requires more complicated mechanisms. A drive ( 13) has a rotational axis which feeds a drive belt (8) which in turn is used to rotate a first axis connected to the dispo carrier, e.g. by an eccentric (9), such that rotation of the axis yields in eccentric, cyclic movement of the carrier. A second axis is connected to the first axis to move with the same frequency and amplitude, which gives a circular movement of the complete dispo carrier.

One advantage of the present invention is that it provides reliable and efficient binding, staining or washing in devices containing immobilized binding reagents. Particularly, it is possible to realize those advantages for more than one device without substantial differences in parallel analyses. It also allows for precise and prescribed movements of the dispo carrier which is of advantage for automatization of device handling and processing.

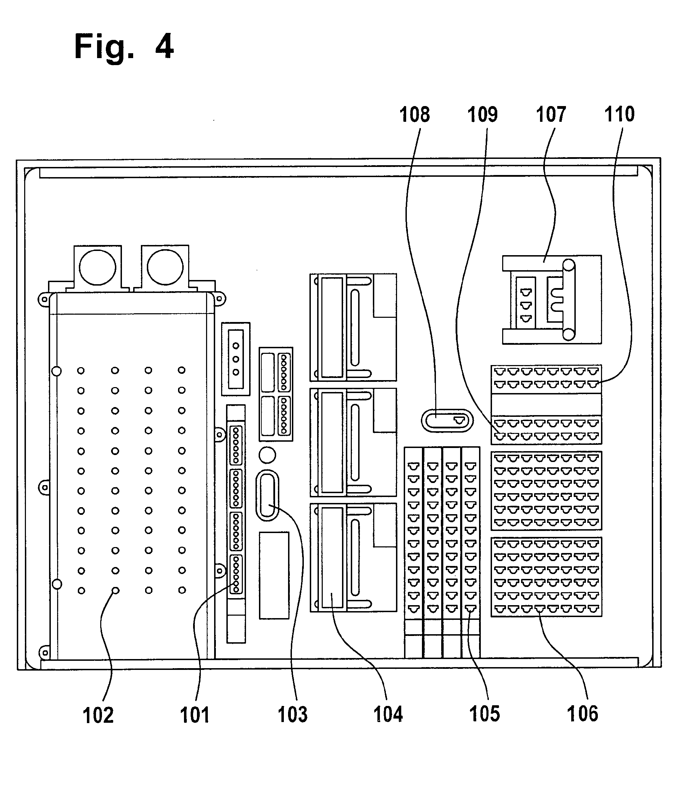

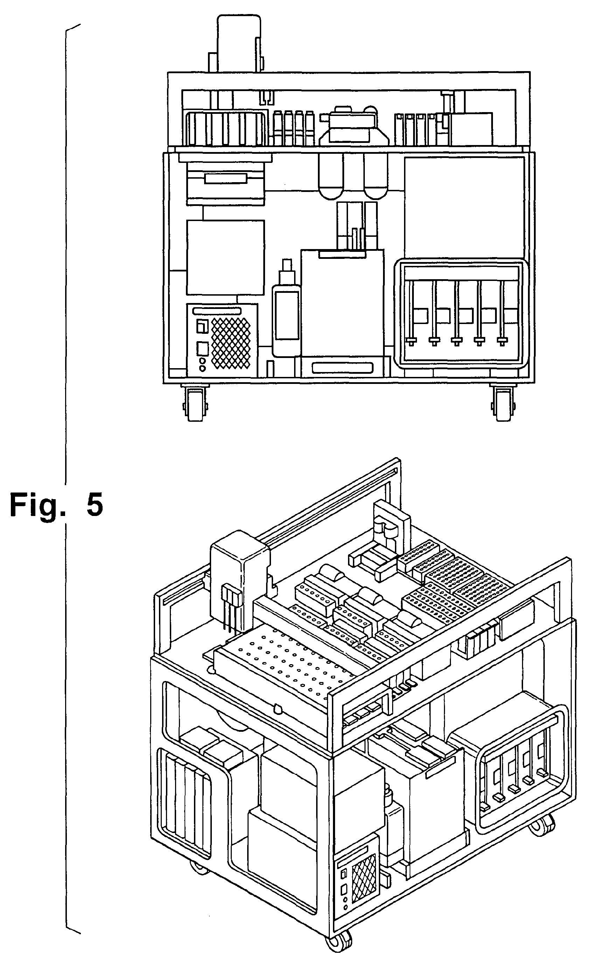

An exemplary instrument according to the invention is shown in FIG 4 and FIG 5. In more detail, the method according to the present invention comprises the following steps:
1. load the sample, the reagents and the diagnostic devices
2. run the sample preparation (e.g. cleavage)
3. if time delay cool down and hold samples
4. transfer the sample to the diagnostic device
5. start the hybridization
6. wash
7. start staining
8. wash
9. transfer to a detection station
10. transfer to a waste station

One advantage of the present invention is that it provides reliable and efficient binding, staining or washing in devices containing immobilized binding reagents.

The method for automated processing of one or more analytical devices containing immobilized binding reagents according to the invention preferably contains the following steps:

In a first step, the samples are loaded into the sample loading area (101). FIG 4 shows a rack of 24 sample vessels, in 4 discrete plates, each having 6 cavities to keep a sample in each cavity. For this, the incubator (104) is opened, the incubator is loaded with sample tubes. Reagents are aspirated from the reagent bottles contained in reagent storage (102). The sample tubes are opened. The reagent is pipetted, dispensed into each of the sample tubes. The sample tubes are closed. The needles are washed. Then the sample tube is incubated at 40° and up to 95°C. During this step the amplified nucleic acids are transformed (cleaved) into shorter pieces. In the staining step, the following steps are performed: The incubator is opened, reagent is aspirated, the sample tubes are opened, and the reagent is dispensed into the sample tubes. The sample tubes are closed, needles are washed. The mixture is incubated at 40° and up to 75°C.

For binding, the following steps are performed: get sample and hybridization buffer, fill chip disposable through pierceable cap, pick and place device into hybridization station, heat and mix, at 60°C up to 16h.

Washing is made as follows: pick and place device into wash station, wash with washing buffer A (multiple times) through pierceable cap, mix during wash procedure, wash needle each time, fill device with stain buffer.

For staining the following steps are performed: pick and place device into stain station, mix during staining,

Another washing is performed as follows: pick and place device into wash station wash with washing buffer B (multiple times) through pierceable cap, mix during wash procedure, wash needle each time, fill device again with stain buffer.

The detection is performed by pick and place device into scanner inlet and start detection.

In another aspect, the invention is directed to a diagnostic instrument for determining the presence of an analyte in a sample comprising
- one or more devices according to the invention,
- a module for entering a sample into said device,
- a module for determining the results of the reaction of analytes in said sample with said reagents.

For illustration of the invention, preferred details of the instrument are explained by referring to the reference numerals shown in FIG 4.

Usually, a sample input station defines the position to receive the containers containing one or more sample vessels. Those positions are defined such that the instrument recognizes each position as to receive a defined sample. This sample preferentially is identified by a label, such as a bar code label that can be read prior to the sample entering the instrument or thereafter or concurrently therewith. This is done by a reader located adjacently to or within the sample input station. In the present invention, the sample receiving station has at least 4 positions to receive sample vessels, preferably at least 8, more preferably between 8 and 96 sample vessels. This way, the instrument is capable of handling a corresponding high number of sample fluids without any need to stop other processes occurring within the instrument.

A module for entering the sample to the device may be a part of the instrument which is used to supply the sample to the diagnostic device of the invention. This is preferably done automatically. Convenient means are pipetting means that can be controlled by a computer. Such pipetting devices are generally known and can be used in the present invention. Conveniently, the device comprises a socket for receiving a pipette tip and a pump for applying a slight vacuum to the interior of the pipette tip, such that, if the lower opening of the pipette tip is in contact with the sample, sample is sucked into the pipette tip. After aspirating the sample, the device is moved to the device according to the present invention, inserting the tip of the pipette tip through the inlet port into the device according to the invention. Then, the liquid is released and dispensed into the device. The same is done for any reagents needed for the reaction.

### Reference numerals:

- 1: Device according to the invention
- 2: Flat carrier (shown from back surface)
- 3: Cap
- 4: Locking frame according to the invention
- 5: Space for bar code label
- 6: Drive
- 7: Gear box
- 8: Drive belt
- 9: Eccentric
- 10: Heater
- 11: Isolation
- 12: Device carrier
- 13: Drive
- 14: Horizontal carriage
- 15: Drive
- 16: Vertical carriage
- 17: Multiple needle support
- 18: Valve unit
- 19: Needle wash
- 20: Bottle carrier
- 101: Sample input module
- 102: Reagent input module
- 103: Waste disposal position
- 104: Incubator
- 105: Device input module
- 106: Hybridization station
- 107: Washing station
- 108: Detection station
- 109: Staining station
- 110: Rinsing station

## Claims

1. An instrument for processing one or more analytical devices containing immobilized binding reagents comprising
- a sample input station,
- one or more treatment stations,
- a detection station, and
- a transfer module
wherein at least one of said treatment stations comprises a shaker unit.

2. The instrument according to claim 1, wherein said at least one treatment station is selected from a binding station, a staining station and a washing station.

3. The instrument according to claim 1, wherein said at least one treatment station is selected from a combined binding and staining, a combined staining and washing, a combined binding and washing and a combined binding, staining and washing station.

4. The instrument according to any of claims 1 to 2, wherein said at least one treatment station is a binding station.

5. The instrument according to any of claims 1 to 2, wherein said at least one treatment station is a staining station.

6. The instrument according to any of claims 1 to 2, wherein said at least one treatment station is a washing station.

7. The instrument according to any of claims 1 to 6, wherein said treatment station is equipped with a heating unit.

8. The instrument according to any of claims 1 and 7, wherein said shaker unit is equipped with a mechanical drive allowing for shaking with a frequency of between 10 and 50 Hz.

9. The instrument according to any of claims 1 to 8, wherein said shaker unit comprises a retainer for 2 or more devices.

10. The instrument according to any of claims 1 to 9, wherein said shaker unit is equipped with a mechanical drive allowing for shaking with an amplitude of between 0.1 and 10 mm.

11. The instrument according to any of claims 1 to 10, wherein said transfer unit comprises a robotic arm comprising a gripper unit and an aspiration-dispensing unit.

12. The instrument according to any of claims 6 to 11, wherein said washing station comprises
- an aspiration-dispensing unit for two or more analytical devices fed with 2 or more wash buffers,
- a shaker unit, and
- a linear drive unit.

13. A diagnostic system for determining one or more analytes in a sample comprising
- an instrument comprising
- a sample input station,
- a treatment station comprising a shaker unit,
- a detection station, and
- a transfer module
- one or more devices containing immobilized binding reagents.

14. The system according to claim 13, wherein the reagents are immobilized on a flat surface facing a processing chamber of the device.

15. The system according to any of claims 13 and 14, wherein the binding reagents are nucleic acid probes.

16. The system according to any of claims 13 to 15, wherein the binding reagents are arranged in arrays.

17. The system according to any of claims 13 to 16, wherein the sample has a volume of between 10 and 500 µm.

18. The system of any of claims 13 to 17, further comprising
- an analyte purification station.

19. The system of any of claims 13 to 18, further comprising
- an amplification station.

20. The system of any of claims 13 to 19, further comprising a data management unit that allows sample tracing from input station to detection result.

21. A method for determining one or more analytes in a sample using an instrument comprising the steps
- inserting the sample in a sample input device into an input station on said instrument,
- inserting one or more devices containing immobilized binding reagents into a disposable input station on said instrument,
- starting a controlled, automated procedure to transport the sample through a binding station and a detection station comprising
- transferring the sample into said device,
- transferring reagents into said device,
- transporting said device into said binding station,
- keeping said device in said binding station under conditions allowing binding of the analyte to be determined with said binding reagents,
- transporting said device into said detection station, and
- detecting a signal based on the binding of said analyte to said binding reagents, and
- determining the analyte based on said signal.

22. The method according to claim 21, wherein the controlled automated procedure comprises removing said device from said detection station.

23. The method according to any of claims 21 and 22, wherein the analyte contains an amplified target sequence.

24. A method for automated processing of one or more analytical devices containing immobilized binding reagents comprising the steps
- providing an instrument comprising one or more treatment stations,
- providing one or more analytical devices containing immobilized binding reagents in a disposable input station on said instrument,
- providing a sample in a sample input station on said instrument,
- starting a controlled, automated procedure to transport the analytical device through said instrument comprising the steps
- transferring the sample into said device,
- transferring reagents into said device,
- transporting said device into said treatment station,
- maintaining said device in said treatment station under conditions allowing said treatment,
wherein said device is shaken during treatment in said treatment station.

25. The method according to claim 24, wherein said treatment is a binding process.

26. The method according to any of claims 24 to 25, wherein said treatment is a staining process.

27. The method according to any of claims 24 to 26, wherein said treatment is a washing process.

28. The method according to any of claims 24 to 26, wherein said conditions comprise heating said device.

29. The method according to any of claims 24 and 28, wherein said shaking is done with a frequency of between 10 and 50 Hz.

30. The method according to any of claims 24 to 29, wherein 2 or more devices are shaken in parallel.

31. The method according to any of claims 24 to 30, wherein said shaking is done with an amplitude of between 0.1 and 10 mm.

32. The method of any of claims 24 to 31, wherein said method is controlled by a data management system.
